(19) Europäisches Patentamt / European Patent Office / Office européen des brevets

(11) EP 2 561 369 B1

(12) FASCICULE DE BREVET EUROPEEN

(45) Date de publication et mention de la délivrance du brevet:
01.04.2015 Bulletin 2015/14

(51) Int Cl.:
G01P 5/12 (2006.01)     G01F 1/684 (2006.01)

(21) Numéro de dépôt: 11720186.3

(22) Date de dépôt: 11.04.2011

(86) Numéro de dépôt international:
PCT/IB2011/051546

(87) Numéro de publication internationale:
WO 2011/128828 (20.10.2011 Gazette 2011/42)

(54) **CAPTEUR A FIL CHAUD DE TAILLE SUBMILLIMETRIQUE ET PROCEDE DE REALISATION ASSOCIE**

HITZDRAHTSENSOR IN SUBMILLIMETERGRÖSSE UND ZUGEHÖRIGES HERSTELLUNGSVERFAHREN

HOT-WIRE SENSOR OF SUBMILLIMETER SIZE AND ASSOCIATED METHOD OF PRODUCTION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 12.04.2010 FR 1001523

(43) Date de publication de la demande:
27.02.2013 Bulletin 2013/09

(73) Titulaires:
• Centre National de la Recherche Scientifique
75016 Paris (FR)
• Ecole Centrale De Lille
59651 Villeneuve d'Ascq (FR)

(72) Inventeurs:
• PERNOD, Philippe Jacques
F-59800 Lille (FR)
• GIMENO MONGE, Leticia
F-38000 Grenoble (FR)
• TALBI, Abdelkrim
F-59110 La Madeleine (FR)
• MERLEN, Alain
F-59000 Lille (FR)
• VIARD, Romain Victor Jean
F-59000 Lille (FR)
• MORTET, Vincent
31000 Toulouse (FR)
• SOLTANI, Ali
F-59491 Villeneuve D'ascq (FR)
• PREOBRAZHENSKY, Vladimir
F-59650 Villeneuve D'ascq (FR)

(74) Mandataire: Reboussin, Yohann Mickaël Noël et al
Cabinet Orès
36, rue de St Pétersbourg
75008 Paris (FR)

(56) Documents cités:
EP-A2- 1 348 937          WO-A1-01/77694
DE-A1-102008 020 874      US-A- 5 883 310

• CHANG LIU ET AL: "Development and characterization of surface micromachined, out-of-plane hot-wire anemometer", JOURNAL OF MICROELECTROMECHANICAL SYSTEMS, IEEE SERVICE CENTER, PISCATAWAY, NJ, US, vol. 12, no. 6, 1 décembre 2003 (2003-12-01), pages 979-988, XP011105288, ISSN: 1057-7157, DOI: DOI:10.1109/JMEMS.2003.820261 cité dans la demande
• ERM L P: "Modifications to a Constant-Temperature Hot-Wire Anemometer System to Measure Higher-Order Turbulence Terms Using Digital Signal Processing", INTERNET CITATION, 1 septembre 1997 (1997-09-01), page 40PP, XP009120987, Extrait de l'Internet: URL:http://www.dtic.mil/cgi-bin/GetTRDoc?AD=ADA335307&Location=U2&doc=GetTRDoc.pdf [extrait le 2009-08-03]

EP 2 561 369 B1

**Description**

La présente invention se rapporte au domaine des capteurs à fil chaud de taille submillimétrique.

D'une façon générale, les fils chauds sont utilisés pour effectuer des mesures de vitesse (anémomètre), de frottement pariétal ou de pression au sein d'un écoulement.

Les exemplaires commerciaux ont habituellement des longueurs millimétriques et des diamètres de l'ordre de quelques microns (5 microns par exemple). Diminuer la taille de ces capteurs, en particulier leur longueur, permettrait de diminuer la perturbation de l'écoulement, d'augmenter la résolution spatiale de la mesure et, de pouvoir effectuer des mesures dans des zones confinées (intérieur d'un orifice par exemple ou en microfluidique).

La majorité des capteurs à fils chauds sont actuellement réalisés par des techniques de fabrication traditionnelles.

Toutefois, récemment, l'utilisation des technologies de microfabrication MEMS (signifiant « Micro Electro Mechanical Systems » selon la terminologie anglo-saxonne) pour la réalisation de capteurs à fil chaud miniaturisés a été proposée.

Un objectif poursuivi par l'utilisation de ces technologies de microfabrication est la réalisation de séries de capteurs implantés en surface de structures (maquette d'aile d'avion par exemple) dans le but de fournir des informations sur l'écoulement en proche paroi. Un autre objectif poursuivi par ces technologies est l'utilisation de ces capteurs pour effectuer une commande en boucle fermée d'actionneurs (également situés en paroi) dans le but de réaliser un contrôle actif de l'écoulement.

Un exemple d'un fil chaud de type MEMS est proposé dans l'article « Development and characterization of surface micromachined, out-of-plane hot-wire anemometer », Jack Chen & Chang Liu, Journal of microelectromechanical systems, vol. 12 (6), December 2003 (D1) ou dans le brevet US 6, 923, 054 correspondant (D2) des mêmes auteurs.

Dans ces documents, le fil chaud de taille submillimétrique comprend un substrat en silicium, deux tiges support en polyimide, un fil métallique (fil chaud) de taille submillimétrique s'étendant entre les deux extrémités des tiges support, ce fil comprenant notamment une première couche de platine, une couche de Nickel et une deuxième couche de Platine.

Les deux tiges support s'étendent perpendiculairement par rapport à la face avant du substrat. A cet effet, les tiges support sont recourbées à angle droit par rapport au plan du substrat au cours du procédé de fabrication.

Le fil métallique est connecté à chacune de ses extrémités à des contacts métalliques en or montés sur les tiges en polyimide, par l'intermédiaire d'une couche d'accroche en Chrome.

Le fil métallique est également monté sur un élément de support mécanique additionnel, également en polyimide, qui s'étend entre les deux tiges support. Le maintien du fil métallique sur cet élément de maintien mécanique en polyimide s'effectue également par l'intermédiaire d'une couche de Chrome.

Les auteurs ont choisi le polyimide comme support pour le fil chaud car il s'agit d'un matériau faiblement conducteur de la chaleur, ce qui permet de minimiser les pertes indésirables à travers le support en polyimide et favorise l'obtention de mesures précises par la partie sensible du capteur (fil chaud).

La conception ainsi proposée dans ce document permet de réaliser des mesures de vitesse dépassant 5m/s, sans dégrader mécaniquement le capteur.

Ainsi, au niveau de la partie sensible du capteur, l'épaisseur du support en polyimide a été choisie de façon à résister à de telles vitesses. L'épaisseur du support en polyimide doit donc avoir une valeur minimale pour assurer la fonction de tenue mécanique du fil chaud, ce dernier présentant une épaisseur faible, à savoir $0,12\mu m$.

Dans le même temps, l'épaisseur du support en polyimide ne doit pas non plus être trop importante car le polyimide apporterait alors une masse thermique trop importante, néfaste pour la réponse fréquentielle de l'anémomètre.

Dans le cas d'espèce, les auteurs ont retenu une épaisseur de polyimide d'environ $2,7\mu m$ comme étant un compromis acceptable entre la tenue mécanique et la réponse fréquentielle de l'anémomètre (par exemple lors d'un changement de vitesse brutal de l'écoulement).

En effet, on note que l'épaisseur du support en polyimide ($2,7\mu m$), largement supérieure à celle de la couche métallique formant fil chaud ($0,12\mu m$), ne peut que difficilement évoluer.

En variante, le document D2 (mais pas le document D1) propose de supprimer le support en polyimide du fil chaud. Il envisage donc un capteur dont la partie sensible (fil chaud) est réalisée uniquement en métal, sans support en polyimide.

Selon cette variante, on comprend que l'épaisseur du métal ($0,12\mu m$) devrait être insuffisante pour que le fil chaud résiste, sans se briser, à des vitesses supérieures à 5m/s.

Par ailleurs, on comprend que la tenue mécanique de ce capteur fil chaud est également limitée par la courbure des tiges supports par rapport au substrat.

En effet, cette courbure crée une zone de flexion pour les tiges support. Par ailleurs, la contrainte au niveau de cette courbure est plus importante qu'ailleurs sur les tiges support.

En raison de sa conception, ce capteur à fil chaud laisse donc apparaître des limitations de performance.

C'est par exemple le cas si l'on souhaite effectuer des mesures de vitesse importantes (> 20 m/s, voire supérieure à 30m/s pour un écoulement d'air) tout en conservant une mesure précise de cette vitesse.

Lorsque du polyimide est prévu au niveau de la partie sensible du capteur, on serait alors amené à augmenter l'épaisseur de polyimide, ce qui serait néfaste pour la précision de la mesure.

Ceci serait encore plus critique pour des écoulements non permanents, dans la mesure où la réponse fréquentielle du capteur est limitée par l'épaisseur de polyimide.

Lorsque que seule une épaisseur de métal est prévue, sans polyimide, au niveau de la partie sensible du capteur, on pourrait penser à augmenter l'épaisseur de métal.

Malheureusement, ceci n'est pas envisageable en raison des contraintes résiduelles existantes dans le métal. Par contrainte résiduelle, on entend la contrainte qui perdure dans un matériau en absence de toute sollicitation externe.

En effet, pour une couche de métal d'épaisseur importante, les contraintes résiduelles conduiraient à obtenir un fil chaud courbe, inexploitable pour effectuer des mesures précises.

En d'autres termes, soit l'épaisseur de métal serait suffisamment faible pour éviter les problèmes de courbure du fil chaud, mais alors ce fil chaud présenterait une tenue mécanique inadaptée pour des vitesses supérieures à 5m/s, soit l'épaisseur de métal serait suffisamment importante pour résister à des vitesses supérieures à 5m/s, mais, dans ce cas, les mesures effectuées par le capteur seraient insuffisamment précises.

En outre, dans tous les cas, l'épaisseur des tiges support devrait également être augmentée pour éviter toute flexion des tiges support, voire toute rupture mécanique de ces tiges.

Enfin, un tel fil chaud est, par conception, solidaire de la paroi contre laquelle l'écoulement prend place, les supports du fil chaud s'étendant hors du plan du substrat. Ce capteur à fil chaud ne peut donc pas être déplacé en tout point de l'écoulement, par exemple pour effectuer des mesures en proximité de la paroi puis au coeur de l'écoulement. En effet, la longueur des supports est fixe et cette longueur détermine la distance entre la paroi et le fil chaud.

Le document US-5 883 310 (D3) propose également un capteur à fil chaud de taille submillimétrique. Ce capteur comprend un substrat, deux tiges support dont une partie est déposée sur le substrat et dont l'autre partie s'étend audelà dudit substrat dans le prolongement de celui-ci, un fil destiné à former le fil chaud s'étendant entre les deux extrémités des tiges support et des contacts électriques disposés sur les tiges support, lesdits contacts étant chacun reliés à l'une des extrémités du fil.

Le fil chaud peut être en polysilicium avec une épaisseur d'environ 0,5 $\mu$m. En variante, le fil chaud peut être métallique (Platine, Tungstène).

Enfin, le document DE-10 2008 020874 (D4) propose une structure de capteur s'apparentant à celle qui est proposée dans le document D3, hormis le fait que les contacts électriques ne sont pas disposés sur les tiges support, mais dans le prolongement de ces tiges. Le fil chaud peut être réalisé en métal ou en polysilicium.

Les capteurs proposés dans les documents D3 et D4 présentent les mêmes inconvénients que ceux qui sont proposés dans les documents D1 et D2 précités.

Un objectif de l'invention est ainsi de pallier l'un au moins des inconvénients des capteurs à fil chaud existants.

En particulier, un objectif de l'invention est de proposer un capteur fil chaud de taille submillimétrique capable d'effectuer des mesures précises dans un écoulement, en proche paroi ou n'importe où dans l'écoulement, tout en s'adaptant aux électroniques de traitement existantes de ce type de capteur.

En particulier également, un objectif de l'invention est de réaliser un capteur fil chaud de taille submillimétrique capable d'effectuer des mesures précises jusqu'à des vitesses élevées, à savoir au-delà de 20 m/s voire au-delà de 30 m/s.

Pour atteindre l'un au moins de ces objectifs, l'invention propose un capteur à fil chaud de taille submillimétrique selon la revendication 1

Le capteur pourra prévoir d'autres caractéristiques techniques de l'invention, prises seules ou en combinaison:

- les tiges support sont réalisées en diamant nanocristallin, en Silicium (Si) ou en carbure de silicium (SiC) ;
- les tiges supports en diamant nanocristallin présentent chacune une épaisseur inférieure à 3$\mu$m, par exemple comprise entre 100nm et 3$\mu$m ;
- lesdites au moins deux couches de matériaux métalliques du fil métallique sont chacune réalisées avec au moins l'un des matériaux métalliques suivants : Ag, Ti, Cr, Al, Cu, Au, Ni, W ou Pt.
- le fil métallique comprend au moins une couche de Nickel revêtue d'au moins une couche de Tungstène, le rapport entre l'épaisseur de la couche de Nickel et celle de la couche de Tungstène étant compris entre 2 et 5 ;
- l'épaisseur de la couche de Nickel est comprise entre 50nm et 2$\mu$m ;
- le fil métallique comporte au moins une couche de Platine ;
- le fil métallique comporte une pluralité de bicouches métalliques, chaque bicouche étant formée par une couche réalisée en un matériau présentant une contrainte résiduelle en tension et une autre couche réalisée en un matériau présentant une contrainte résiduelle en compression, les épaisseurs de ces couches de métal étant adaptées pour compenser les contraintes résiduelles entre les différentes couches afin d'obtenir une contrainte résiduelle totale au fil métallique inférieure à la valeur limite ;

- le fil métallique comporte :

  ◦ une première couche de platine ;
  ◦ une pluralité de bicouches formées par une couche de Nickel revêtue d'une couche de Tungstène ; et
  ◦ une deuxième couche de platine.

- l'épaisseur du fil métallique est comprise entre 100nm et 5$\mu$m, de préférence entre 1$\mu$m et 3$\mu$m ;
- le fil métallique présente une longueur comprise entre 50$\mu$m et 1mm ;
- le fil métallique présente une résistance ohmique évoluant linéairement avec la température et telle qu'elle est comprise entre 5 Ohm et 10 Ohm à 20°C et entre 10 Ohm et 15 Ohm à 200°C ;
- il est prévu une couche d'isolation thermique entre les contacts métalliques et les tiges supports, par exemple en dioxyde de silicium, en nitrure de silicium, en céramique ou en un matériau polymérique ;
- il est prévu un renfort mécanique disposé entre les tiges support et sous le fil métallique ;
- le renfort mécanique présente une épaisseur inférieure à 3$\mu$m, par exemple comprise entre 100nm et 3$\mu$m.

Pour atteindre l'un au moins de ces objectifs, l'invention propose également un procédé de réalisation d'un capteur à fil chaud de taille submillimétrique selon la revendication 16 (étapes (a) à (f)).

Ce procédé pourra également comprendre les étapes suivantes, prises seules ou en combinaison :

- l'étape (a) consiste à faire croître une couche de diamant nanocristallin sur la face avant du substrat ;
- l'étape (a) comporte des étapes consistant à :

  ($a_1$) préparer une solution colloïdale de cristallites nanométriques de diamant diluée, par exemple dans de l'eau ;
  ($a_2$) disposer le substrat dans ladite solution ;
  ($a_3$) soumettre le substrat ainsi plongé dans cette solution à des ultrasons.

- l'étape (d) est réalisée à une température comprise entre 200°C et 700°C pendant une durée comprise entre 15mn et 45mn ;
- l'étape (f) est réalisée par gravure chimique, par exemple par une gravure humide dans un bain de KOH ou par une gravure en phase gazeuse sous $XeF_2$ ;
- l'étape (f) est réalisée par une gravure physico-chimique, par exemple une gravure sous plasma de type Bosch DRIE ;
- il est prévu, avant l'étape (e), une étape additionnelle consistant à déposer une couche d'isolation thermique sur les tiges, et sur le substrat, dans le prolongement desdites tiges.

D'autres caractéristiques, buts et avantages de l'invention seront énoncés dans la description détaillée ci-après faite en référence aux figures suivantes:

- la figure 1 est un schéma représentatif d'un capteur à fil chaud selon l'invention ;
- la figure 2 représente l'évolution de la contrainte résiduelle totale d'une multicouche de matériaux métalliques susceptible de former le fil chaud du capteur selon l'invention au fur et à mesure de son élaboration ;
- la figure 3 représente une vue par microscopie électronique de transmission à balayage d'une multicouche de matériaux métalliques susceptible de former le fil chaud du capteur selon l'invention ;
- la figure 4 représente l'évolution de la résistance ohmique d'une multicouche de matériaux métalliques en fonction de la température ;
- la figure 5 est une vue de coupe partielle selon la coupe A-A représentée sur la figure 1 ;
- la figure 6, qui comprend les figures 6(a) et 6(b), représente sur la figure 6(b) un profil particulier utilisé pour la réalisation d'une étape de dépôt d'au moins une couche métallique destinée à former le fil chaud selon l'invention, la figure 6(a) représentant un profil classique fourni à titre de référence ;
- la figure 7 représente des structures intermédiaires obtenues par la mise en oeuvre d'un procédé de réalisation du capteur selon l'invention.

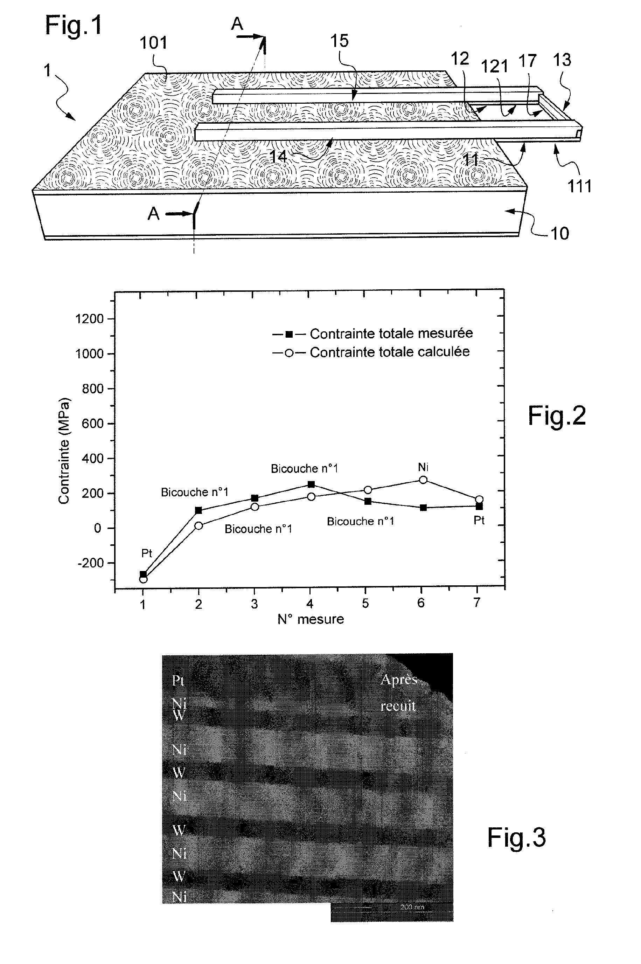

Un capteur à fil chaud de taille submillimétrique selon l'invention est schématisé sur les figures 1 et 2. Ce capteur 1 à fil chaud comprend un substrat 10 et deux tiges support 11, 12 dont une partie 110 est déposée sur le substrat 10 et dont l'autre partie 111, 121 s'étend au-delà dudit substrat 10 dans le prolongement de celui-ci.

Les parties 111, 121 sont donc situées dans le prolongement des parties de la tige situées sur la face avant 101 du substrat 10.

Le substrat 10 peut être réalisé en silicium. Tout autre matériau utilisé en tant que substrat serait également susceptible de convenir.

Les tiges support 11, 12 peuvent être réalisées en diamant nanocristallin. Dans ce cas, ces tiges 11, 12 peuvent présenter chacune une épaisseur faible, inférieure à 3$\mu$m et par exemple comprise entre 100nm et 3$\mu$m tout en assurant une fonction de maintien mécanique. En effet, le diamant nanocristallin présente des propriétés mécaniques intéressantes associées à un faible coefficient d'expansion thermique. Ainsi, son module de Young est d'environ 1100 GPa, sa limite d'élasticité d'environ 53 GPa et son coefficient d'expansion thermique d'environ 1 ppm/°C.

En variante, les tiges support 11, 12 peuvent être réalisées en silicium (Si) ou en carbure de silicium (SiC).

La partie 111, 121 des tiges support 11, 12 qui s'étend au-delà du substrat 10 présente une largeur qui diminue avec l'augmentation de la distance par rapport au substrat (non représenté). Ceci permet de limiter l'effet intrusif des tiges support au fur et à mesure qu'on s'éloigne du substrat, c'est-à-dire de la paroi le long de laquelle prend place l'écoulement dont on cherche à connaître certaines caractéristiques (vitesse par exemple).

Le capteur 1 comprend également un fil métallique 13 de taille submillimétrique s'étendant entre les deux extrémités des tiges support 11, 12, ce fil étant destiné à former le fil chaud.

Le fil métallique 13 pourra être constitué d'au moins un matériau métallique parmi les suivants : Ag, Ti, Cr, Al, Cu, Au, Ni, W ou Pt.

De préférence, le fil métallique 13 comprendra au moins deux couches de matériaux métalliques, dont l'une est réalisée en un matériau présentant une contrainte résiduelle en tension et dont l'autre est réalisée en un matériau présentant une contrainte résiduelle en compression.

On appelle contrainte résiduelle la contrainte qui perdure dans un matériau en absence de toute sollicitation externe.

Par exemple, le fil métallique 13 comprend au moins une couche de Nickel (Ni) revêtue d'au moins une couche de Tungstène (W).

Le Nickel présente une contrainte résiduelle en tension et le Tungstène une contrainte résiduelle en compression, dont les valeurs dépendent cependant des conditions de dépôt.

Un premier test a été effectué pour déterminer ces contraintes résiduelles. Le demandeur a ainsi mesuré la contrainte résiduelle du Nickel en déposant, pleine plaque, une couche de Nickel sur un substrat silicium. Il a également mesuré la contrainte résiduelle du Tungstène en déposant, pleine plaque, une couche de Tungstène sur un substrat identique au substrat utilisé avec le Nickel.

Dans les deux cas, la couche de métal déposé (Ni ou W) est une couche mince par rapport aux dimensions du substrat.

Par ailleurs, les dépôts ont été réalisés par pulvérisation cathodique.

Cette technique utilise un plasma de gaz inerte, tel que l'Argon, pour pulvériser une cible du matériau à déposer (Ni ou W). La pression d'argon employée est comprise entre 0.9Pa (soit un débit d'Argon de 25sccm, à savoir 25 cm$^3$/min avec la chambre utilisée) et 3.1 Pa (soit un débit d'Argon de 110sccm avec cette même chambre).

Le plasma est créé entre la cible (polarisée négativement) et le substrat (polarisé positivement), et ainsi les atomes arrachés à la cible sont dirigés vers le substrat. Le plasma a été densifié et concentré à l'aide du champ magnétique crée par un magnétron pour augmenter la vitesse des dépôts. La puissance RF choisie est de 300W.

Dans la gamme de pressions de gaz inerte comprise entre 1,2Pa et 3,1 Pa, le demandeur a constaté que la tension résiduelle dans le Nickel évoluait de façon peu significative et présentait une valeur absolue variant autour de 550Mpa. Par ailleurs, dans la gamme de pressions de gaz inerte comprise entre 0.9Pa et 3.1 Pa, le demandeur a constaté que la compression résiduelle dans le Tungstène évoluait de façon peu significative et présentait une valeur absolue variant autour de 1250Mpa.

Pour compenser les contraintes résiduelles de la couche de Nickel avec celle de la couche de Tungstène, il apparaît donc que l'épaisseur de la couche de Nickel doit être plus élevée que l'épaisseur de la couche de Tungstène.

Un paramètre intervenant dans le contrôle de l'épaisseur des couches est le temps de dépôt de chaque couche.

Plus précisément, le rapport exact entre l'épaisseur de la couche de Nickel et celle de Tungstène pour minimiser la contrainte résiduelle totale dépend des conditions de dépôt de ces couches (puissance du magnétron, pression de gaz inerte, durée du dépôt), mais également du nombre de bicouches Ni/W que le fil métallique destiné à former le fil chaud est susceptible de comprendre.

Une compensation des contraintes résiduelles entre les différentes couches de métal du fil peut être jugée acceptable lorsque la contrainte résiduelle totale du fil métallique est inférieure à une valeur limite $C_{lim}$. Par exemple, cette valeur limite peut valoir $C_{lim}$ = 250MPa, et de préférence $C_{lim}$ = 200MPa.

Cette compensation des contraintes résiduelles est importante. En effet, une contrainte résiduelle supérieure à la valeur limite impliquerait une forme courbe du fil chaud entre les deux tiges support 11, 12. Une telle forme rend le capteur 1 inutilisable pour effectuer des mesures précises de la grandeur physique qu'il est destiné à mesurer au sein de l'écoulement (vitesse, pression ou contrainte pariétale).

Le demandeur a ainsi réalisé un deuxième test pour un fil métallique comprenant plusieurs bicouches Nickel/Tungstène.

Il a ainsi été testé un fil métallique destiné à former un fil chaud comportant notamment une première couche de platine, une pluralité de bicouches formées par une couche de Nickel revêtue d'une couche de Tungstène et, une deuxième couche de platine. Le dépôt de plusieurs bicouches successives permet de compenser la contrainte résiduelle graduellement jusqu'à l'obtention de l'épaisseur désirée.

Les couches de platine protègent ainsi complètement le Nickel et Tungstène contre les phénomènes d'oxydation.

Plus précisément, la composition du fil métallique testé est fournie dans le tableau 1 ci-dessous, avec les durées de dépôt associées aux épaisseurs des différentes couches de métal du fil.

Tableau 1

| Matériau | Point de mesure | Temps de dépôt | Epaisseur |
|----------|-----------------|----------------|-----------|
| Pt | P9 | 2 min | 300 nm |
| Ni | P8 | 50 min | 250 nm |
| W | P7 | 1 min | 65 nm |
| Ni | | 50 min | 250 nm |
| W | P6 | 1 min | 65 nm |
| Ni | | 50 min | 250 nm |
| W | P5 | 1 min | 65 nm |
| Ni | | 50 min | 250 nm |
| W | P4 | 1 min | 65 nm |
| Ni | P3 | 50 min | 250 nm |
| Pt | P2 | 2 min | 300 nm |
| Ti | P1 | 50 s | 50 nm |

La première couche déposée sur le substrat est une couche de Titane (Ti). Elle est revêtue d'une première couche de Platine (Pt), de quatre bicouches de Ni/W, d'une couche de Nickel et d'une deuxième couche de Platine. L'épaisseur de la couche métallique ainsi obtenue est de $2,16\mu m$.

Les moyens utilisés pour le dépôt sont les mêmes que ceux cités précédemment. Ainsi, on utilise de l'Argon comme gaz inerte et un magnétron réglé à la même puissance.

Les contraintes résiduelles de chaque couche ont été ajustées en jouant sur deux paramètres, à savoir le débit d'Argon (c'est-à-dire la pression d'Argon dans la chambre) et le temps de dépôt.

Le débit d'Argon utilisé pour le dépôt d'une couche de Nickel est de 45sccm (pression de 1,5 Pa environ). Pour une couche de Tungstène, il est de 85sccm (pression de 2,66 Pa). Enfin, pour une couche de Platine, il est de 25sccm (pression de 0,9 Pa) Les temps de dépôt sont quant à eux précisés dans le tableau 1.

La figure 2 représente l'évolution de la contrainte résiduelle totale de la couche de métal en fonction du numéro de mesure.

Comme on peut le constater, cette contrainte résiduelle totale dépend notamment du nombre de bicouches Ni/W prévues. Le fil correspondant à la structure du tableau 1 présente finalement une contrainte résiduelle totale mesurée d'environ 170Mpa.

Pour mesurer cette contrainte résiduelle totale, un profilomètre est utilisé. Pour effectuer la mesure, la chambre est vidée de son atmosphère neutre et mise à l'air libre. Or, le demandeur a constaté lors de la mesure n°5 que la couche de Tungstène de la bicouche n°3 (point de mesure n°4) était oxydée, probablement suite à une exposition trop longue à l'air ambiant lors de la mesure n°4. Ceci a certainement faussé les mesures des points de mesure n°5 et n°6.

Le demandeur a donc cherché à vérifier cet aspect.

Le tableau 2 précise les valeurs de contraintes résiduelles mesurées respectivement pour une couche de Platine (Pt), une couche de Nickel (Ni) ou une couche de Tungstène (W) pour les débits d'Argon et épaisseurs de couches (donc temps de dépôt) mentionnés dans le tableau 1.

Tableau 2

| Matériau | Débit (sccm) | Temps de dépôt (min) | Epaisseur (nm) | Contrainte (MPa) |
|----------|--------------|----------------------|----------------|------------------|
| Pt | 25 | 2 | 300 | -550 |

(suite)

| Matériau | Débit (sccm) | Temps de dépôt (min) | Epaisseur (nm) | Contrainte (MPa) |
|---|---|---|---|---|
| Ni | 45 | 50 | 250 | 600 |
| W | 85 | 1 | 65 | -600 |

Or, il est connu de l'homme du métier qu'en réalisant une multicouche dont l'épaisseur totale reste mince par rapport à celle du substrat, on peut approximer la contrainte résiduelle totale ($\sigma_{totale}$) présente dans la multicouche par la somme des contraintes dans chaque couche ($\sigma_{couche, i}$) pondérée par leur épaisseur relative à l'épaisseur totale ($t_{couche, i}/t_{totale}$), tel que le montre l'équation suivante.

$$\sigma_{totale} = \sum_{i=1}^{n} \sigma_{couche,i} \frac{t_{couche,i}}{t_{totale}} \qquad (R1)$$

Les calculs effectués avec la relation R1 et les données du tableau 2 appliquées au tableau 1 sont mentionnés sur la figure 2.

Ces calculs montrent effectivement que les points de mesures n°5 et n°6 ont été faussés par l'oxydation du Tungstène lors de la mesure n° 4, par profilomètre, de la contrainte résiduelle totale.

En définitive, ces tests montrent finalement que la structure du fil métallique du tableau 1, à savoir une structure du fil comportant plusieurs bicouches Nickel/Tungstène, peut être envisagée tout en conservant une contrainte résiduelle totale inférieure à la limite requise $C_{lim}$.

Ces tests montrent également qu'on a, de manière générale, pas non plus intérêt à prévoir un trop grand nombre de bicouches Ni/W afin de conserver une contrainte résiduelle totale inférieure à cette valeur limite $C_{lim}$.

Comme on peut le constater, le rapport entre l'épaisseur de la couche de Nickel et celle de la couche de Tungstène est de 3,85 dans le cas d'espèce (tableaux 1 et 2).

Plus généralement, ce rapport pourra cependant être compris entre 2 et 5.

Par ailleurs, l'épaisseur de la couche de Nickel peut être comprise entre 50nm et 2$\mu$m. En fonction du rapport entre les épaisseurs des couches de Nickel et de Tungstène mentionnées ci-dessus, cela permet d'en déduire l'épaisseur d'une couche de Tungstène correspondante.

Le fil métallique 13 comportera généralement deux couches de Platine, entre lesquelles seront disposés les bicouches Ni/W afin de protéger ces dernières contre les phénomènes d'oxydation.

L'épaisseur $e_{fil}$ du fil métallique 13 peut être comprise entre 100nm et 5$\mu$m, par exemple entre 150nm et 3$\mu$m et, de préférence, entre 1$\mu$m et 3$\mu$m.

Sa longueur $L_{fil}$ peut être comprise entre 50$\mu$m et 1 mm.

Sa largeur $l_{fil}$ peut varier, mais sera généralement de l'ordre de quelques microns, par exemple voisine de 5$\mu$m.

Dans tous les cas, pour optimiser le fonctionnement du capteur 1 à fil chaud, il faut prendre des valeurs de longueur $L_{fil}$ du fil métallique 13 les plus élevées possibles et des valeurs du diamètre hydraulique $d_h$ du fil 13 les plus faibles possibles.

Le diamètre hydraulique $d_h$ est défini par la relation : $d_h = 4S/P$ où S est la section du fil chaud 13 et P son périmètre mouillé. Si l'on suppose que le fil métallique 13 est de section carrée, alors le diamètre hydraulique équivaut à son côté.

Le diamètre hydraulique peut être différent, par exemple lorsque le fil métallique 13 présente une forme rectangulaire et/ou est maintenu par un élément de renfort mécanique 17 s'étendant entre les deux tiges support 11, 12. Cet élément de renfort 17 est décrit ci-après.

En réalité, il est connu de l'homme du métier que la relation : $L_{fil}/d_h \geq 30$ doit être respectée pour assurer une mesure fiable de la grandeur physique à mesurer avec le fil chaud.

Il est également préférable, pour un capteur 1 à fil chaud, d'utiliser des matériaux présentant une conductivité thermique relativement forte pour l'élément sensible, afin d'atteindre une bonne réponse en fréquence et, une faible conductivité thermique pour les éléments de support, afin d'éviter les pertes de chaleur parasites. Le choix d'un métal n'est a priori pas le plus pertinent sur ce point. Cependant, dans la famille des métaux, le Nickel et le Tungstène présentent des conductivités thermiques modérées. En effet, le Nickel présente une conductivité thermique de 91 W.m$^{-1}$.K$^{-1}$ et le Tungstène une conductivité thermique de 173 W.m$^{-1}$.K$^{-1}$.

Une des raisons pour lesquelles un matériau métallique est choisi pour former le fil chaud est précisé ci-après.

Pour un capteur à fil chaud, un aspect important est de connaître l'évolution de la résistance ohmique R(T) du fil avec la température. Cette résistance ohmique dépend de la nature des matériaux formant le fil.

En effet, les capteurs à fil chaud cherchent à maintenir soit une température constante au niveau de leur interface avec le milieu fluide, soit un flux thermique constant à travers cette interface. Ainsi, quel que soit le cas considéré, il faut ajuster la puissance dissipée par effet Joule dans le fil métallique 13 pour maintenir cette température (ou le flux thermique) d'interface. Or, la puissance dissipée par effet Joule dépend de la résistance ohmique du fil 13, laquelle dépend elle-même de la température (moyenne) de ce fil.

Dans un fil métallique, la résistance ohmique R(T) peut s'exprimer sous la forme :

$$R(T) = R_0 \left[ 1 + \alpha_0 (T - T_0) \right] \qquad \text{(R2)}$$

où :

$T_0$ est une température de référence, $\alpha_0$ est le coefficient de résistance en température à la température $T_0$ et $R_0$ la résistance ohmique du fil à la température $T_0$.

Le coefficient de résistance en température $\alpha$ est également connu sous l'acronyme TCR pour «Temperature Coefficient Resistance » selon la terminologie anglo-saxonne.

Dans ces conditions, déterminer l'évolution de la résistance ohmique du fil métallique en fonction de la température revient à déterminer sa résistance $R_0$ à une température de référence $T_0$ et son coefficient de résistance en température $\alpha_0$ à cette température de référence.

Le demandeur a effectué un test avec un fil métallique dont la composition est fournie dans le tableau 3 ci-dessous, avec les durées de dépôt associées aux épaisseurs des différentes couches de métal du fil. L'épaisseur du fil métallique ainsi testé est de 2,35μm.

Tableau 3

| Ordre | Matériau | Temps de dépôt | Epaisseur |
|-------|----------|----------------|-----------|
| 1 | Ti | 50 s | 50 nm |
| 2 | Pt | 2 min | 300 nm |
| 3-4 | Ni-W | 4*10min-2 min | 200 nm-100 nm |
| 5-6 | Ni-W | 4*10min-2 min | 200 nm-100 nm |
| 7-8 | Ni-W | 4*10min-2 min | 200 nm-100 nm |
| 9-10 | Ni-W | 4*10min-2 min | 200 nm-100 nm |
| 11-12 | Ni-W | 4*10min-2 min | 200 nm-100 nm |
| 13 | Ni | 4*10min | 200 nm |
| 14 | Pt | 2 min | 300 nm |

Les moyens employés pour le dépôt de ces couches sont ceux présentés ci-avant.

Par ailleurs, la multicouche ainsi déposée a été recuite sous vide pendant 30 minutes, à 550°C, et avec une montée en température contrôlée (incrément de 50°C/min) ainsi qu'un refroidissement naturel.

Le recuit sous vide est important pour éviter l'oxydation de la couche de Tungstène, qui est l'élément limitant parmi le Nickel, le Tungstène et le Platine.

La structure du tableau 3 obtenue après recuit est montrée sur la figure 3.

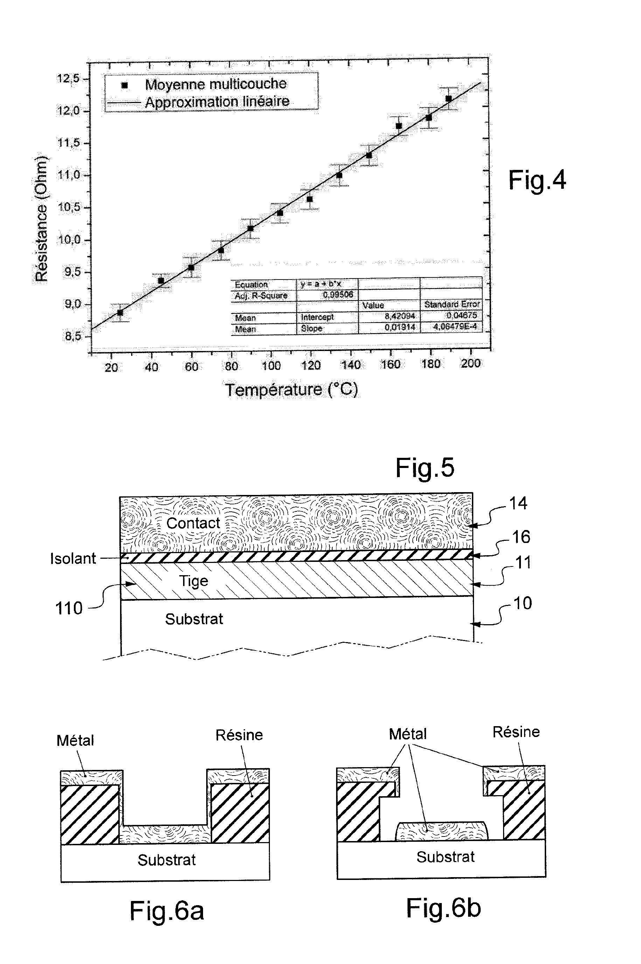

Des résultats sont fournis sur la figure 4, avec la régression linéaire qui l'accompagne.

Compte tenu de la relation (R2), la pente de la régression linéaire est défini par le produit $\alpha_0 R_0$ et son ordonnée à l'origine par $R_0 - \alpha_0 T_0$, l'origine correspondant à la température de référence $T_0 = 0$°C. On peut alors en déduire les valeurs de $\alpha_0$ et $R_0$.

Pour obtenir le coefficient de résistance en température à une température de référence $T_{20}$ correspondant à la température ambiante de 20°C, on utilise alors la relation la relation (R3) suivante :

$$\alpha_{20} = \alpha_0 \frac{R_0}{R_{20}} \qquad (R3)$$

$\alpha_0$ et $R_0$ étant connus et $R_{20}$ pouvant être lu directement sur la courbe de la figure 2.

Ainsi, le fil métallique dont la composition est fournie dans le tableau 1 présente un coefficient de résistance en température à 20°C $\alpha_{20}$ de 2175 ppm/°C. La résistance R(T) évolue entre 8,7$\Omega$ à 20°C et 12,3$\Omega$ à 200 °C.

Compte tenu des dimensions du fil métallique du tableau 3, le demandeur a alors déterminé la résistivité électrique p de ce fil à 8,6 $\mu\Omega$.cm environ.

Ces valeurs de résistance sont relativement faibles. Elles permettent une utilisation avec l'électronique de traitement existante sur le marché pour les capteurs à fil chaud, par exemple un bloc électronique Streamline® pour l'anémométrie à température constante de la société Dantec. En effet, les capteurs commercialisés par cette société ont des résistances ohmiques généralement inférieures à 30 Ohm. Lorsque ces capteurs présentent une résistance inférieure à 30 Ohm, ils peuvent être branchés directement sur le bloc électronique. Entre 30 Ohm et 100 Ohm, ils doivent être branchés au bloc électronique par l'intermédiaire d'une résistance externe réglable.

La valeur de ce coefficient de résistance en température est plus faible que les valeurs connues du coefficient de résistance en température pour le Nickel, le Tungstène et le Platine. De même, la valeur de la résistivité est plus faible que les valeurs connues pour le Nickel, le Tungstène et le Platine.

Pour s'assurer de ce résultat, le demandeur a donc réalisé des tests dans les mêmes conditions opératoires (dépôt, recuit) pour, respectivement, une couche Nickel, une couche de Tungstène et une couche de Platine sur un substrat identique.

Le tableau 4 suivant précise les durées de dépôt associées aux épaisseurs des différentes couches de métal.

Tableau 4

| Matériau | Temps de dépôt | Epaisseur |
|----------|----------------|-----------|
| Pt | 3 min | 380 nm |
| W | 5 min | 330 nm |
| Ni | 3*20 min | 310 nm |

La méthode de régression linéaire présentée ci-dessous a alors permis d'aboutir aux données suivantes pour le coefficient de résistance en température à 20°C :

- Nickel : $\alpha_{20}$ = 5000 ppm/°C ;
- Tungstène : $\alpha_{20}$ = 3375 ppm/°C; et
- Platine : $\alpha_{20}$ = 5750 ppm/°C.

Par ailleurs, compte tenu des dimensions des couches de métal ainsi déposées, la résistivité a été mesurée à

- p = 24,3 $\mu\Omega$.cm pour le Nickel ;
- p = 28,7 $\mu\Omega$.cm pour le Tungstène ; et
- p = 20 $\mu\Omega$.cm pour le Platine.

On peut effectivement noter que le coefficient de résistance en température obtenu avec le fil métallique dont la composition est donnée dans le tableau 3 est sensiblement inférieur à ceux obtenus, dans les mêmes conditions opératoires, avec l'un quelconque des métaux Ni, W ou Pt pris isolément.

En définitive, la résistance du fil métallique linéairement, conformément à la relation R2. Outre l'exemple fourni précédemment, on peut considérer que l'évolution de la résistance ohmique de ce fil sera linéaire et telle qu'elle est comprise entre 5 Ohm et 10 Ohm à 20°C et entre 10 Ohm et 15 Ohm à 200°C.

Le capteur 1 selon l'invention comprend aussi des contacts métalliques 14, 15 disposés sur les tiges supports 11, 12, lesdits contacts étant chacun reliés à l'une des extrémités du fil métallique 13 formant fil chaud.

Les contacts métalliques 14, 15 peuvent comprendre au moins l'un des matériaux suivants : Ag, Ti, Cr, Al, Cu, Au, Ni, W ou Pt.

En particulier, les contacts métalliques 14, 15 peuvent présenter une structure et une composition identiques à celles du fil métallique 13. Dans ce cas, les contacts métalliques 14, 15 peuvent notamment comprendre au moins une couche de Nickel revêtue d'une couche de Tungstène, celles-ci étant éventuellement disposées entre une première couche de Platine (couche inférieure) et une deuxième couche de Platine (couche supérieure). Par exemple également, les contacts métalliques 14, 15 peuvent présenter la structure du tableau 1 ou du tableau 3.

Un élément de renfort mécanique 17 peut être prévu entre les extrémités des tiges support 11, 12, sous le fil métallique 13. Ce renfort mécanique 17 présente une épaisseur inférieure à $3\mu m$, par exemple comprise entre 100nm et $3\mu m$. La nature du matériau peut par exemple être la même que celle formant les tiges support 11, 12.

Une couche d'isolation thermique 16 peut être prévue entre les contacts métalliques 14, 15 et les tiges supports 11, 12. Celle-ci est représentée sur la figure 5, en vue de coupe. Cette couche peut par exemple être réalisée en dioxyde de silicium, en nitrure de silicium, en céramique ou en un matériau polymérique.

Cette couche d'isolation thermique 16 est en particulier utile lorsque le matériau formant les tiges support 11, 12 est un matériau conducteur thermique.

C'est par exemple le cas du diamant qui présente une conductivité thermique comprise entre 500 $W.m^{-1}.K^{-1}$ et 2000 $W.m^{-1}.K^{-1}$.

En général, le diamant nanocristallin présente une conductivité thermique voisine de 500 $W.m^{-1}.K^{-1}$, alors que le diamant monocristallin présente une conductivité thermique voisine de 2000 $W.m^{-1}.K^{-1}$.

Par diamant nanocristallin, on entend un diamant dont les cristaux ne dépassent généralement pas 100nm, même si certains cristaux (en faible quantité) peuvent présenter une dimension allant au-delà de 100nm. Plus précisément, la taille des cristaux peut être comprise entre 1 nm et 100nm.

Selon la nature du diamant utilisé, une couche d'isolation thermique 16 peut être ajoutée pour limiter les pertes thermiques et un éventuel biais dans la mesure de la grandeur physique qu'on cherche à mesurer avec le capteur, la vitesse par exemple.

Cela permet ainsi de trouver un compromis intéressant entre la sensibilité du capteur et sa réponse fréquentielle.

Par ailleurs, on peut également prévoir que cette couche d'isolation thermique 16 recouvre complètement les contacts métalliques 14, 15.

Pour réaliser le capteur à fil chaud selon l'invention, on prévoit les étapes suivantes :

(a) déposer, sur la face avant du substrat, une couche 20 en un matériau destiné à former des tiges support du capteur ;

(b) graver ledit matériau déposé à l'étape (a) afin de former au moins deux tiges support ;

(c) déposer au moins une couche de matériau métallique entre les extrémités des tiges support gravées à l'étape (b), afin de former un fil métallique ;

(d) effectuer un recuit du fil métallique déposé à l'étape (c) ;

(e) déposer une ou plusieurs couches de métal sur les tiges support afin de former des contacts métalliques, de sorte que chaque contact soit relié à l'une des extrémités du fil métallique ;

(f) graver le support afin de libérer une partie des tiges support du substrat.

L'étape (a) peut consister à faire croître une couche de diamant nanocristallin sur la face avant du substrat.

Le diamant est un matériau offrant une tenue mécanique élevée. Suivant les conditions de dépôt et la technique de dépôt, on peut obtenir du diamant nanocristallin, polycristallin ou monocristallin.

Dans le cas du diamant nanocristallin, la rugosité de surface est généralement faible, et s'apprête à la mise en oeuvre de l'étape (b). Cependant, il peut être prévu, préalablement à l'étape (b), une étape visant à modifier la rugosité de surface, comme un polissage mécanique ou un traitement plasma.

En effet, il faut noter que les propriétés physico-chimiques de ces films dépendent de leur cristallographie. Par exemple, la taille des cristaux doit être suffisamment faible afin d'obtenir une rugosité de surface faible par rapport à l'épaisseur de la couche de diamant déposée.

A défaut, la rugosité de surface du diamant se transmettrait probablement aux autres couches. Ainsi, le fil métallique 13 pourrait également présenter une rugosité de surface importante, susceptible de fausser les mesures de grandeurs physiques à réaliser par le capteur à fil chaud.

Or, le diamant présente un paramètre de maille différent de celui du substrat, par exemple en Silicium. Pour adapter le paramètre de maille du diamant à celui du substrat, il faut alors contrôler la densité de nucléation et les conditions de dépôt du diamant sur le substrat.

Par ce biais, on contrôle la taille des nanocristaux pendant la croissance.

Le contrôle de la densité de nucléation à la surface du substrat peut s'effectuer comme suit.

On disperse des cristallites nanométriques de diamant sur le substrat à l'aide de solutions colloïdales diluées dans de l'eau. Le substrat est alors placé dans un bain à ultrasons avec ces éléments en suspension. Les ultrasons provoquent le dépôt des cristallites sur le substrat, dont la densité peut être supérieure à $10^{11}$ $cm^{-2}$.

Cette technique présente l'avantage de pouvoir traiter des surfaces en trois dimensions, tout en préservant lesdites surfaces (à l'opposé de techniques mécaniques par exemple). La surface du substrat est ainsi préservée pour le dépôt proprement dit de la couche de diamant.

Des conditions de dépôt envisageables pour la couche de diamant sont mentionnées ci-dessous.

La croissance de la couche de diamant s'effectue à une pression inférieure à la pression atmosphérique et à une température modérée inférieure à 1000°C, en utilisant un flux de gaz carboné porté par un gaz inerte qu'on dissocie à l'aide d'une source d'énergie. Le gaz carboné peut être du méthane. Le gaz inerte peut être de l'hydrogène. La source d'énergie peut être un générateur de micro-ondes, un filament chauffant ou tout moyen équivalent.

Par exemple, on peut utiliser un réacteur de dépôt CVD Astex AX6550 assisté d'un plasma $H_2/CH_4$ gardant une concentration de méthane toujours inférieure à 3%. La source d'énergie micro-ondes est choisie à 2.45GHz, et sa puissance fixée à 3,5kW environ. La pression dans l'enceinte a été choisie à 30 Torr et la température du substrat a été maintenue à 700°C à l'aide d'un pyromètre à double longueur d'onde Williamson Pro 92.

Lorsque l'étape (a) consiste à faire croître un diamant nanocristallin, l'étape (b) peut alors être réalisée sous un plasma réactif $O_2$ à haute énergie, c'est-à-dire pour une puissance RF de plusieurs kW minimum. L'étape (b) peut également comporter, en plus de la gravure des tiges de support 14, 15, la gravure de l'élément de renfort mécanique 17 s'étendant entre les deux tiges 14, 15 et destiné à être disposé sous le fil métallique 13.

L'étape (c) peut être réalisée par un procédé connu sous la dénomination anglo-saxonne « lift-off» avec un profil en forme de casquette. Ce procédé de photolithographie consiste à définir d'abord les motifs dans une résine photosensible avec un profil casquette, déposer le métal puis, enlever la résine afin de faire apparaître les motifs. La figure 6(b) représente un profil en casquette et la figure 6(a) un profil droit fourni à titre de comparaison.

Les conditions opératoires lors de cette étape (c) peuvent notamment être celles décrites ci-dessus pour la réalisation des multicouches de matériaux métalliques fournies dans les tableaux 1 ou 3.

L'étape (d) peut consister en un recuit sous vide pendant une durée comprise entre 15mn et 45mn à 550°C et un refroidissement naturel. La montée en température est contrôlée, par exemple avec un incrément de 50°C/min.

Plus généralement, la température de recuit doit être supérieure à la température de fonctionnement du fil chaud. Dans ces conditions, la température de recuit peut être comprise entre 200°C et 700°C. En particulier, on notera qu'il est ainsi possible de réaliser un capteur à fil chaud de taille submillimétrique fonctionnant à des températures supérieures ou égales à 400°C. Les matériaux employés permettent en effet d'effectuer le recuit à une température notamment comprise entre 400°C et 700°C.

Par ailleurs, la montée en température doit être progressive avec un pas maximum de 100°C/min.

Ni l'épaisseur de métal destiné à former le fil chaud, ni le nombre de couches formant celui-ci ne conditionne les paramètres de mise en oeuvre de l'étape de recuit.

L'étape (e) peut consister à mettre en oeuvre les deux étapes suivantes:

$(e_1)$ déposer une couche de germination, par exemple par pulvérisation, sur les tiges support ; puis
$(e_2)$ déposer au moins une couche de matériau métallique par électrolyse sur la couche de germination déposée à l'étape $(e_1)$, et éventuellement d'autres couches métalliques sur la première couche métallique.

Lorsque plusieurs couches métalliques sont prévues, comme pour les structures des tableaux 1 ou 3, l'étape $(e_2)$ consiste plus précisément à déposer successivement les couches de matériau métallique par électrolyse, la première couche métallique étant déposée sur la couche de germination.

L'étape (f) peut être effectuée en face arrière seule, en face avant seule ou par une combinaison des deux.

L'étape (f) peut être réalisée par gravure chimique, par exemple par une gravure humide dans un bain de KOH ou par une gravure en phase gazeuse sous $XeF_2$.

En variante, l'étape (f) peut être réalisée par une gravure physico-chimique, par exemple une gravure sous plasma de type Bosch DRIE.

En variante également, l'étape (f) peut être réalisée par l'une quelconque des combinaisons des techniques chimique et physico-chimique mentionnées ci-dessus.

Ainsi, il est notamment possible d'effectuer une première étape $(f_1)$ consistant à réaliser une gravure sous plasma de type Bosch DRIE du côté face arrière du substrat, puis une deuxième étape $(f_2)$ consistant à effectuer une gravure en phase gazeuse sous $XeF_2$ du côté face avant du substrat.

L'étape $(f_2)$ facilite la libération des tiges support 11, 12 et de l'ensemble de la structure l'accompagnant (contacts métalliques 14, 15, fil métallique 13), en évitant tout arrachement.

Avant l'étape (e), on peut prévoir une étape additionnelle consistant à déposer une couche d'isolation thermique 16 sur les tiges et sur le substrat, dans le prolongement desdites tiges.

Cette couche d'isolation thermique 16 est par exemple utile lorsque le matériau déposé lors de l'étape (a) est conducteur thermique. C'est par exemple le cas du diamant nanocristallin.

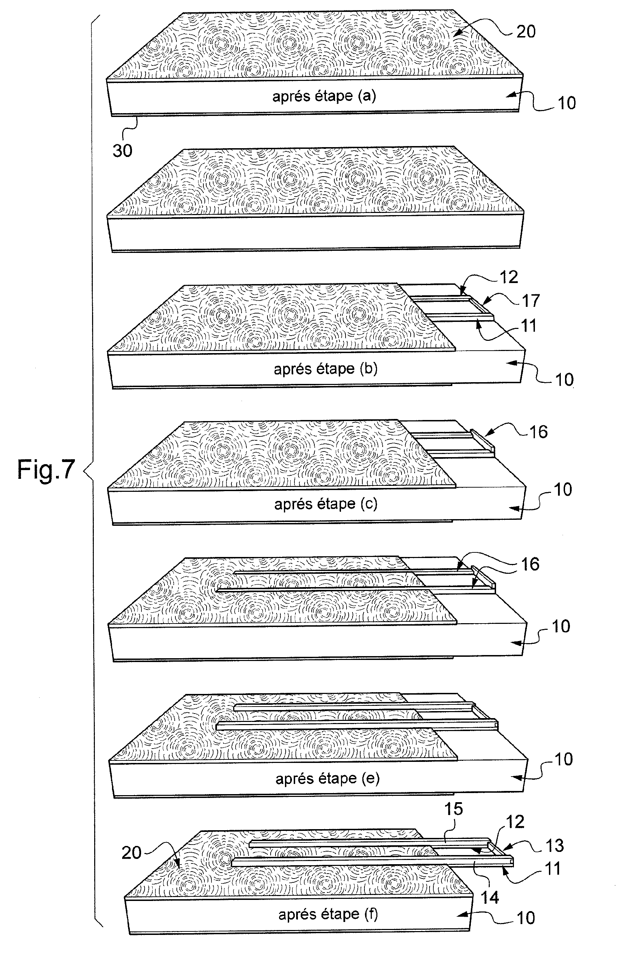

A titre d'exemple, on a représenté sur la figure 7 différentes structures intermédiaires obtenues dans la réalisation d'un capteur fil chaud conforme à l'invention. Le capteur 1 finalement obtenu comporte une couche d'isolation thermique 16 entre les tiges support 11, 12 et les contacts métalliques 14, 15. Par ailleurs, ce capteur 1 comporte également un renfort mécanique 17 disposé sous le fil métallique 13, entre les deux tiges support 11, 12.

Il faut noter que les structures représentées sur la figure 7 font apparaître une couche 30 en aluminium, servant de masque pour la gravure du procédé Bosch DRIE.

Il faut enfin noter que le capteur représenté sur la figure 1, obtenu par le procédé ci-dessus, peut faire l'objet de déclinaisons.

Par exemple, il est possible de disposer plusieurs fils chauds en série sur le substrat 10 afin d'effectuer des cartographies de vitesse le long de l'écoulement. Il est également possible de disposer plusieurs fils chauds en parallèle pour effectuer des mesures de vorticité. Il est encore possible de disposer au moins deux fils orientés perpendiculairement l'un à l'autre afin d'obtenir des mesures de différentes composantes de la vitesse.

Le capteur fil chaud selon l'invention pourra être adapté pour effectuer des mesures de contrainte pariétale ou des mesures de pression.

Parmi les nombreux avantages que l'invention procure, on notera que le capteur à fil chaud permet d'effectuer des mesures précises en proche paroi ou au coeur de l'écoulement.

En effet, le substrat peut être solidaire d'un moyen pour déplacer le capteur n'importe où dans l'écoulement et ce, contrairement aux capteurs à fil chaud de taille submillimétrique existants, cf. par exemple les documents D1 ou D2.

En outre, des mesures précises peuvent être obtenues à des vitesses élevées, à savoir au-delà de 20m/s voire au-delà de 30m/s grâce aux choix effectués pour la conception du capteur.

Ces choix concernent notamment l'épaisseur du fil métallique, laquelle peut être obtenue par un dépôt en multicouches, le choix éventuel de diamant nanocristallin et/ou la nature des tiges support.

Ces choix concernent également le fait qu'une partie des tiges support s'étend au-delà dudit substrat dans le prolongement de celui-ci et ce, contrairement au capteur divulgué dans les documents D1 ou D2. Les tiges support ne présentent donc aucune zone recourbée susceptible au mieux de fléchir dans un écoulement de vitesse élevée, au pire de se briser.

## Revendications

1. Capteur (1) à fil chaud de taille submillimétrique, comprenant :

   - un substrat (10) ;
   - deux tiges support (11, 12) dont une partie (110) est déposée sur le substrat (10) et dont l'autre partie (111, 121) s'étend au-delà dudit substrat dans le prolongement de celui-ci ;
   - un fil métallique (13) destiné à former le fil chaud, ce fil s'étendant entre les deux extrémités des tiges support (11, 12) ;
   - des contacts électriques (14, 15) disposés sur les tiges supports, lesdits contacts étant chacun reliés à l'une des extrémités du fil (13) ;

   **caractérisé en ce que** le fil métallique (13) comprend au moins deux couches de matériaux métalliques, dont l'une est réalisée en un matériau présentant une contrainte résiduelle en tension et dont l'autre est réalisée en un matériau présentant une contrainte résiduelle en compression, les épaisseurs de ces couches de métal étant adaptées pour compenser les contraintes résiduelles entre les différents couches afin d'obtenir une contrainte résiduelle totale du fil métallique inférieure à une valeur limite de 250 MPa.

2. Capteur (1) à fil chaud de taille submillimétrique selon la revendication 1, dans lequel les tiges support (11, 12) sont réalisées en diamant nanocristallin, en Silicium (Si) ou en carbure de silicium (SiC).

3. Capteur (1) à fil chaud de taille submillimétrique selon la revendication précédente, dans lequel les tiges supports (11, 12) en diamant nanocristallin présentent chacune une épaisseur inférieure à $3\mu m$, par exemple comprise entre 100nm et $3\mu m$.

4. Capteur (1) à fil chaud de taille submillimétrique selon l'une des revendications précédentes, dans lequel lesdites au moins deux couches de matériaux métalliques du fil métallique (13) sont chacune réalisée avec au moins l'un des matériaux métalliques suivants : Ag, Ti, Cr, Al, Cu, Au, Ni, W ou Pt.

5. Capteur (1) à fil chaud de taille submillimétrique selon l'une des revendications précédentes, dans lequel le fil métallique (13) comprend au moins une couche de Nickel revêtue d'au moins une couche de Tungstène, le rapport entre l'épaisseur de la couche de Nickel et celle de la couche de Tungstène étant compris entre 2 et 5.

6. Capteur (1) à fil chaud de taille submillimétrique selon la revendication précédente, dans lequel l'épaisseur de la couche de Nickel est comprise entre 50nm et 2$\mu$m.

7. Capteur (1) à fil chaud de taille submillimétrique selon l'une des revendications précédentes, dans lequel le fil métallique (13) comporte au moins une couche de Platine.

8. Capteur (1) à fil chaud de taille submillimétrique selon l'une des revendications précédentes, dans lequel le fil métallique (13) comporte une pluralité de bicouches métalliques, chaque bicouche étant formée par une couche réalisée en un matériau présentant une contrainte résiduelle en tension et une autre couche réalisée en un matériau présentant une contrainte résiduelle en compression, les épaisseurs de ces couches de métal étant adaptées pour compenser les contraintes résiduelles entre les différentes couches afin d'obtenir une contrainte résiduelle totale du fil métallique inférieure à la valeur limite

9. Capteur (1) à fil chaud de taille submillimétrique selon la revendication précédente, dans lequel le fil métallique (13) comporte :

   - une première couche de platine ;
   - une pluralité de bicouches formées par une couche de Nickel revêtue d'une couche de Tungstène ; et
   - une deuxième couche de platine.

10. Capteur (1) à fil chaud de taille submillimétrique selon l'une des revendications précédentes, dans lequel l'épaisseur du fil métallique (13) est comprise entre 100nm et 5$\mu$m, de préférence entre 1$\mu$m et 3$\mu$m.

11. Capteur (1) à fil chaud de taille submillimétrique selon l'une des revendications précédentes, dans lequel le fil métallique (13) présente une longueur comprise entre 50$\mu$m et 1 mm.

12. Capteur (1) à fil chaud de taille submillimétrique selon l'une des revendications précédentes, dans lequel le fil métallique (13) présente une résistance ohmique évoluant linéairement avec la température et telle qu'elle est comprise entre 5 Ohm et 10 Ohm à 20°C et entre 10 Ohm et 15 Ohm à 200°C.

13. Capteur (1) à fil chaud de taille submillimétrique selon l'une des revendications précédentes, dans lequel il est prévu une couche d'isolation thermique (16) entre les contacts métalliques (14, 15) et les tiges supports (11, 12), par exemple en dioxyde de silicium, en nitrure de silicium, en céramique ou en un matériau polymérique.

14. Capteur (1) à fil chaud de taille submillimétrique selon l'une des revendications précédentes, dans lequel il est prévu un renfort mécanique (17) disposé entre les tiges support (11, 12) et sous le fil métallique (13).

15. Capteur (1) à fil chaud de taille submillimétrique selon la revendication précédente, dans lequel le renfort mécanique (17) présente une épaisseur inférieure à 3$\mu$m, par exemple comprise entre 100nm et 3$\mu$m.

16. Procédé de réalisation d'un capteur à fil chaud de taille submillimétrique comprenant les étapes consistant, à partir d'un substrat, à :

   (a) déposer, sur la face avant du substrat, une couche en un matériau destiné à former des tiges support du capteur ;
   (b) graver ledit matériau déposé à l'étape (a) afin de former au moins deux tiges support ;
   (e) déposer une ou plusieurs couches de métal sur les tiges support afin de former des contacts électriques, de sorte que chaque contact soit relié à l'une des extrémités du fil métallique ;
   (f) graver le substrat afin de libérer une partie des tiges support du substrat ;
   **caractérisé en ce qu'**entre l'étape (b) et l'étape (e), le procédé comprend les étapes consistant à
   (c) déposer au moins deux couches de matériaux métalliques entre les extrémités des tiges support gravées à l'étape (b) afin de former un fil métallique, l'une de ces couches étant réalisée en un matériau présentant une contrainte résiduelle en tension et l'autre étant réalisée en un matériau présentant une contrainte résiduelle en compression, les épaisseurs de ces couches de métal étant adaptées pour compenser les contraintes résiduelles entre les différents couches afin d'obtenir une contrainte résiduelle totale du fil métallique inférieure à une valeur limite,
   (d) effectuer un recuit du fil métallique déposé à l'étape (c).

17. Procédé de réalisation d'un capteur à fil chaud de taille submillimétrique selon la revendication précédente, dans lequel l'étape (a) consiste à faire croître une couche de diamant nanocristallin sur la face avant du substrat.

18. Procédé de réalisation d'un capteur à fil chaud de taille submillimétrique selon la revendication précédente, dans lequel l'étape (a) comporte des étapes consistant à :

(a$_1$) préparer une solution colloïdale de cristallites nanométriques de diamant diluée, par exemple dans de l'eau ;
(a$_2$) disposer le substrat dans ladite solution ;
(a$_3$) soumettre le substrat ainsi plongé dans cette solution à des ultrasons.

19. Procédé de réalisation d'un capteur à fil chaud de taille submillimétrique selon l'une des revendications 16 à 18, dans lequel l'étape (d) est réalisée à une température comprise entre 200°C et 700°C pendant une durée comprise entre 15mn et 45mn.

20. Procédé de réalisation d'un capteur à fil chaud de taille submillimétrique selon l'une des revendications 16 à 19, dans lequel l'étape (f) est réalisée par gravure chimique, par exemple par une gravure humide dans un bain de KOH ou par une gravure en phase gazeuse sous XeF$_2$.

21. Procédé de réalisation d'un capteur à fil chaud de taille submillimétrique selon l'une des revendications 16 à 19, dans lequel l'étape (f) est réalisée par une gravure physico-chimique, par exemple une gravure sous plasma de type Bosch DRIE.

22. Procédé de réalisation d'un capteur à fil chaud de taille submillimétrique selon l'une des revendications 16 à 21, dans lequel il est prévu, avant l'étape (e), une étape additionnelle consistant à déposer une couche d'isolation thermique sur les tiges, et sur le substrat, dans le prolongement desdites tiges.

**Patentansprüche**

1. Hitzdrahtsensor (1) in Submillimetergröße, der aufweist:

   - ein Substrat (10),
   - zwei Stützstäbe (11, 12), von denen sich ein Teil (110) auf dem Substrat (10) befindet und von denen sich der andere Teil (111, 121) über das genannte Substrat hinaus in der Verlängerung von diesem erstreckt,
   - ein Metalldraht (13), der dazu bestimmt ist, den Hitzdraht zu bilden, wobei dieser Draht sich zwischen den zwei Enden der Stützstäbe (11, 12) erstreckt,
   - elektrische Kontakte (14, 15), die sich auf den Stützstäben befinden, wobei jeder der Kontakte mit einem der Enden des Drahtes (13) verbunden ist,

   **dadurch gekennzeichnet, dass** der Metalldraht (13) zumindest zwei Metallmaterialschichten aufweist, von denen eine aus einem Material ausgeführt ist, das eine Zugeigenspannung aufweist, und von denen die andere aus einem Material ausgeführt ist, das eine Druckeigenspannung aufweist, wobei die Dicken dieser Metallschichten angepasst sind, um die Eigenspannungen zwischen den unterschiedlichen Schichten auszugleichen, damit eine gesamte Eigenspannung des Metalldrahtes erreicht wird, die niedriger als ein Grenzwert von 250 MPa ist.

2. Hitzdrahtsensor (1) in Submillimetergröße nach Anspruch 1, wobei die Stützstäbe (11, 12) aus nanokristallinem Diamant, aus Silizium (Si) oder aus Siliziumkarbid (SiC) ausgeführt sind.

3. Hitzdrahtsensor (1) in Submillimetergröße nach dem vorhergehenden Anspruch, wobei die Stützstäbe (11, 12) aus nanokristallinem Diamant jeweils eine Dicke aufweisen, die kleiner als 3 $\mu$m, beispielsweise zwischen 100nm und 3$\mu$m ist.

4. Hitzdrahtsensor (1) in Submillimetergröße nach einem der vorhergehenden Ansprüche, wobei die zumindest zwei Metallmaterialschichten des Metalldrahtes (13) jeweils mit zumindest einem der folgenden Metallmaterialien ausgeführt sind: Ag, Ti, Cr, Al, Cu, Au, Ni, W oder Pt.

5. Hitzdrahtsensor (1) in Submillimetergröße nach einem der vorhergehenden Ansprüche, wobei der Metalldraht (13) zumindest eine Nickelschicht aufweist, die mit zumindest einer Wolframschicht überzogen ist, wobei das Verhältnis zwischen der Dicke der Nickelschicht und derjenigen der Wolframschicht zwischen 2 und 5 ist.

6. Hitzdrahtsensor (1) in Submillimetergröße nach dem vorhergehenden Anspruch, wobei die Dicke der Nickelschicht zwischen 50nm und 2µm liegt.

7. Hitzdrahtsensor (1) in Submillimetergröße nach einem der vorhergehenden Ansprüche, wobei der Metalldraht (13) zumindest eine Platinschicht aufweist.

8. Hitzdrahtsensor (1) in Submillimetergröße nach einem der vorhergehenden Ansprüche, wobei der Metalldraht (13) eine Vielzahl an Metalldoppelschichten aufweist, wobei jede Doppelschicht durch eine Schicht, die aus einem Material ausgeführt ist, das eine Zugeigenspannung aufweist, und eine andere Schicht gebildet ist, die aus einem Material ausgeführt ist, das eine Druckeigenspannung aufweist, wobei die Dicken dieser Metallschichten angepasst sind, um die Eigenspannungen zwischen den unterschiedlichen Schichten auszugleichen, damit eine gesamte Eigenspannung des Metalldrahtes erhalten wird, die kleiner als der Grenzwert ist.

9. Hitzdrahtsensor (1) in Submillimetergröße nach dem vorhergehenden Anspruch, wobei der Metalldraht (13) aufweist:

    - eine erste Platinschicht,
    - eine Vielzahl von Doppelschichten, die durch eine Nickelschicht gebildet sind, die mit einer Wolframschicht überzogen ist, und
    - eine zweite Platinschicht.

10. Hitzdrahtsensor (1) in Submillimetergröße nach einem der vorhergehenden Ansprüche, wobei die Dicke des Metalldrahtes (13) zwischen 100nm und 5 µm, vorzugsweise zwischen 1 µm und 3 µm, liegt.

11. Hitzdrahtsensor (1) in Submillimetergröße nach einem der vorhergehenden Ansprüche, wobei der Metalldraht (13) eine Länge zwischen 50 µm und 1 mm aufweist.

12. Hitzdrahtsensor (1) in Submillimetergröße nach einem der vorhergehenden Ansprüche, wobei der Metalldraht (13) einen ohmschen Widerstand aufweist, der sich linear mit der Temperatur verändert und derart, dass dieser zwischen 5 Ohm und 10 Ohm bei 20°C und zwischen 10 Ohm und 15 Ohm bei 200°C liegt.

13. Hitzdrahtsensor (1) in Submillimetergröße nach einem der vorhergehenden Ansprüche, wobei bei diesem eine thermische Isolierschicht (16) zwischen den Metallkontakten (14, 15) und den Stützstäben (11, 12) vorgesehen ist, beispielsweise aus Siliziumdioxid, aus Siliziumnitrid, aus Keramik oder aus einem Polymermaterial.

14. Hitzdrahtsensor (1) in Submillimetergröße nach einem der vorhergehenden Ansprüche, wobei eine mechanische Verstärkung (17) vorgesehen ist, die sich zwischen den Stützstäben (11, 12) und unter dem Metalldraht (13) befindet.

15. Hitzdrahtsensor (1) in Submillimetergröße nach dem vorhergehenden Anspruch, wobei die mechanische Verstärkung (17) eine Dicke kleiner als 3 µm, beispielsweise zwischen 100nm und 3µm, aufweist.

16. Verfahren zur Umsetzung eines Hitzdrahtsensor in Submillimetergröße, das ausgehend von einem Substrat die folgenden Schritte aufweist:

    (a) Aufbringen einer Schicht aus einem Material, mit dem beabsichtigt ist, Stützstäbe des Sensors zu bilden, auf die Vorderfläche des Substrates,
    (b) Ätzen des in Schritt (a) aufgebrachten Materials, damit zumindest zwei Stützstäbe gebildet werden,
    (e) Aufbringen von einer oder mehren Metallschichten auf die Stützstäbe, damit elektrische Kontakte gebildet werden, in der Art, dass jeder Kontakt mit einem der Enden des Metalldrahtes verbunden ist,
    (f) Ätzen des Substrats, damit ein Teil der Stützstäbe von dem Substrat befreit ist, **dadurch gekennzeichnet, dass** zwischen Schritt (b) und Schritt (e) das Verfahren die folgenden Schritte aufweist
    (c) Aufbringen von zumindest zwei Schichten aus Metallmaterialien zwischen die Enden der Stützstäbe, die in Schritt (b) geätzt wurden, damit ein Metalldraht gebildet wird, wobei eine dieser Schichten aus einem Material ausgeführt ist, das eine Zugeigenspannung aufweist, und die andere aus einem Material ausgeführt ist, das eine Druckeigenspannung aufweist, wobei die Dicken dieser Metallschichten angepasst sind, um die Eigenspannungen zwischen den unterschiedlichen Schichten auszugleichen, damit eine gesamte Eigenspannung des Metalldrahtes erhalten wird, die kleiner als ein Grenzwert ist,
    (d) Bewirken eines Glühens des Metalldrahtes, der in Schritt (c) aufgebracht wurde.

**17.** Verfahren zur Umsetzung eines Hitzdrahtsensor in Submillimetergröße nach dem vorhergehenden Anspruch, wobei Schritt (a) darin besteht, eine nanokristalline Diamantschicht auf der Vorderfläche des Substrates wachsen zu lassen.

**18.** Verfahren zur Umsetzung eines Hitzdrahtsensor in Submillimetergröße nach dem vorhergehenden Anspruch, wobei Schritt (a) die Schritte aufweist:

($a_1$) Vorbereiten einer, beispielsweise mit Wasser, verdünnten Kolloidlösung aus nanometrischen Kristalliten aus Diamant, ,
($a_2$) Einbringen des Substrats in die Lösung,
($a_3$) Ultraschall-Aussetzen des in dieser Weise in diese Lösung getauchten Substrats.

**19.** Verfahren zur Umsetzung eines Hitzdrahtsensor in Submillimetergröße nach einem der Ansprüche 16 bis 18, wobei der Schritt (d) bei einer Temperatur zwischen 200°C und 700°C während einer Dauer zwischen 15 min und 45 min ausgeführt wird.

**20.** Verfahren zur Umsetzung eines Hitzdrahtsensor in Submillimetergröße nach einem der Ansprüche 16 bis 19, wobei der Schritt (f) durch chemischen Ätzen umgesetzt wird, beispielsweise durch ein feuchtes Ätzen in einem Bad von KOH oder durch ein Gasphasenätzen unter $XeF_2$.

**21.** Verfahren zur Umsetzung eines Hitzdrahtsensor in Submillimetergröße nach einem der Ansprüche 16 bis 19, wobei Schritt (f) durch physikalisch-chemisches Ätzen durchgeführt wird, beispielweise Ätzen unter Plasma von Typ Bosch DRIE.

**22.** Verfahren zur Umsetzung eines Hitzdrahtsensor in Submillimetergröße nach einem der Ansprüche 16 bis 21, wobei vor Schritt (e) ein zusätzlicher Schritt vorgesehen ist, der darin besteht, eine thermische Isolierschicht auf die Stäbe und auf das Substrat in der Verlängerung der Stäbe aufzubringen.

**Claims**

**1.** Submillimetre-sized hot-wire sensor (1), comprising:

- a substrate (10);
- two support rods (11, 12), one portion of which (110) is deposited on the substrate (10) and the other portion of which (111, 121) extends beyond said substrate in the continuation thereof;
- a metal wire (13) intended to form the hot wire, this wire extending between the two ends of the support rods (11, 12);
- electrical contacts (14, 15) positioned on the support rods, said contacts each being connected to one of the ends of the wire (13);

**characterized in that** the metal wire (13) comprises at least two layers of metallic materials, one of which is made of a material having a residual tensile stress and the other of which is made of a material having a residual compressive stress, the thicknesses of these metal layers being suitable for compensating for the residual stresses between the various layers in order to obtain a total residual stress of the metal wire below a limiting value of 250 MPa.

**2.** Submillimetre-sized hot-wire sensor (1) according to Claim 1, wherein the support rods (11, 12) are made of nanocrystalline diamond, of silicon (Si) or of silicon carbide (SiC).

**3.** Submillimetre-sized hot-wire sensor (1) according to the preceding claim, wherein the support rods (11, 12) made of nanocrystalline diamond each have a thickness of less than 3 $\mu$m, for example between 100 nm and 3 $\mu$m.

**4.** Submillimetre-sized hot-wire sensor (1) according to one of the preceding claims, wherein said at least two layers of metallic materials of the metal wire (13) are each made with at least one of the following metallic materials: Ag, Ti, Cr, Al, Cu, Au, Ni, W or Pt.

**5.** Submillimetre-sized hot-wire sensor (1) according to one of the preceding claims, wherein the metal wire (13) comprises at least one layer of nickel coated with at least one layer of tungsten, the ratio between the thickness of the nickel layer and that of the tungsten layer being between 2 and 5.

6.  Submillimetre-sized hot-wire sensor (1) according to the preceding claim, wherein the thickness of the nickel layer is between 50 nm and 2 $\mu$m.

7.  Submillimetre-sized hot-wire sensor (1) according to one of the preceding claims, wherein the metal wire (13) comprises at least one layer of platinum.

8.  Submillimetre-sized hot-wire sensor (1) according to one of the preceding claims, wherein the metal wire (13) comprises a plurality of metal bilayers, each bilayer being formed by a layer made of a material having a residual tensile stress and another layer made of a material having a residual compressive stress, the thicknesses of these metal layers being suitable for compensating for the residual stresses between the various layers in order to obtain a total residual stress of the metal wire that is below the limiting value.

9.  Submillimetre-sized hot-wire sensor (1) according to the preceding claim, wherein the metal wire (13) comprises:

    - a first layer of platinum;
    - a plurality of bilayers formed by a layer of nickel coated with a layer of tungsten; and
    - a second layer of platinum.

10.  Submillimetre-sized hot-wire sensor (1) according to one of the preceding claims, wherein the thickness of the metal wire (13) is between 100 nm and 5 $\mu$m, preferably between 1 $\mu$m and 3 $\mu$m.

11.  Submillimetre-sized hot-wire sensor (1) according to one of the preceding claims, wherein the metal wire (13) has a length between 50 $\mu$m and 1 mm.

12.  Submillimetre-sized hot-wire sensor (1) according to one of the preceding claims, wherein the metal wire (13) has an ohmic resistance that changes linearly with the temperature and such that it is between 5 ohms and 10 ohms at 20°C and between 10 ohms and 15 ohms at 200°C.

13.  Submillimetre-sized hot-wire sensor (1) according to one of the preceding claims, wherein a thermally-insulating layer (16) is provided between the metal contacts (14, 15) and the support rods (11, 12), for example made of silicon dioxide, silicon nitride, ceramic or a polymer material.

14.  Submillimetre-sized hot-wire sensor (1) according to one of the preceding claims, wherein a mechanical reinforcement (17) is provided placed between the support rods (11, 12) and under the metal wire (13).

15.  Submillimetre-sized hot-wire sensor (1) according to the preceding claim, wherein the mechanical reinforcement (17) has a thickness of less than 3 $\mu$m, for example between 100 nm and 3 $\mu$m.

16.  Process for producing a submillimetre-sized hot-wire sensor, comprising the steps consisting, starting from a substrate, in:

    (a) depositing, on the front face of the substrate, a layer made of a material intended to form support rods of the sensor;
    (b) etching said material deposited in step (a) in order to form at least two support rods;
    (e) depositing one or more layers of metal on the support rods in order to form electrical contacts, so that each contact is connected to one of the ends of the metal wire;
    (f) etching the substrate in order to free a portion of the support rods from the substrate; **characterized in that**, between step (b) and step (e), the process comprises the steps consisting in (c) depositing at least two layers of metallic materials between the ends of the support rods etched in step (b) in order to form a metal wire, one of these layers being made of a material having a residual tensile stress and the other being made of a material having a residual compressive stress, the thicknesses of these metal layers being suitable for compensating for the residual stresses between the various layers in order to obtain a total residual stress of the metal wire that is below a limiting value,
    (d) annealing the metal wire deposited in step (c).

17.  Process for producing a submillimetre-sized hot-wire sensor according to the preceding claim, wherein step (a) consists in growing a layer of nanocrystalline diamond on the front face of the substrate.

**18.** Process for producing a submillimetre-sized hot-wire sensor according to the preceding claim, wherein step (a) comprises steps consisting in:

($a_1$) preparing a colloidal solution of nanometresized diamond crystallites diluted, for example in water;
($a_2$) placing the substrate in said solution;
($a_3$) subjecting the substrate thus immersed in this solution to ultrasounds.

**19.** Process for producing a submillimetre-sized hot-wire sensor according to one of Claims 16 to 18, wherein step (d) is carried out at a temperature between 200°C and 700°C for a duration between 15 min and 45 min.

**20.** Process for producing a submillimetre-sized hot-wire sensor according to one of Claims 16 to 19, wherein step (f) is carried out by chemical etching, for example by wet etching in a bath of KOH or by gas-phase etching in $XeF_2$.

**21.** Process for producing a submillimetre-sized hot-wire sensor according to one of Claims 16 to 19, wherein step (f) is carried out by physicochemical etching, for example plasma etching of Bosch DRIE type.

**22.** Process for producing a submillimetre-sized hot-wire sensor according to one of Claims 16 to 21, wherein an additional step consisting in depositing a thermally-insulating layer on the rods, and on the substrate, in the continuation of said rods, is provided before step (e).

Fig.1

Fig.2

Fig.3

Fig.4

| Equation | y = a + b*x | | |
|---|---|---|---|
| Adj. R-Square | 0,99506 | | |
| | | Value | Standard Error |
| Mean | Intercept | 8,42094 | 0,04675 |
| Mean | Slope | 0,01914 | 4,06479E-4 |

Fig.5

Fig.6a          Fig.6b

Fig.7

EP 2 561 369 B1

21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6923054 B
- US 5883310 A
- DE 102008020874

**Littérature non-brevet citée dans la description**

- **JACK CHEN ; CHANG LIU.** Development and characterization of surface micromachined, out-of-plane hot-wire anemometer. *Journal of microelectromechanical systems,* Décembre 2003, vol. 12 (6